# EUROPÄISCHE PATENTANMELDUNG

(11) **EP 4 006 539 A1**
(43) Veröffentlichungstag der Anmeldung: **01.06.2022**
(21) Anmeldenummer: 20209824.0
(22) Anmeldetag: 25.11.2020
(51) Int. Cl.: G01N 29/14, F17C 13/00, G01N 29/22

(54) **DRUCKAUFBRINGVORRICHTUNG ZUR DURCHFÜHRUNG EINER SCHALLEMISSIONSPRÜFUNG UND VERFAHREN ZUR DURCHFÜHRUNG EINER SCHALLEMISSIONSPRÜFUNG**

(71) Anmelder: TÜV SÜD Industrie Service GmbH, 80686 München (DE)
(72) Erfinder: KRAUS, Daniel, 92660 Neustadt (DE)
(74) Vertreter: Grünecker Patent- und Rechtsanwälte PartG mbB

(57) **Zusammenfassung**

Die Erfindung betrifft eine Druckaufbringvorrichtung zur Durchführung einer Schallemissionsprüfung an Druckbehältern sowie ein entsprechendes Verfahren.

Ein solches Druckgerät ist insbesondere ein Druckbehälter, in dem unter Druck verflüssigtes Gas enthalten ist. Dem Druckgerät ist zumindest eine Heizeinrichtung als Druckaufbringvorrichtung zur gesteuerten Erwärmung und/oder Verdampfung eines Teils des im Druckgerät enthaltenen Gases oder verflüssigten Gases zugeordnet. Dadurch wird eine entsprechende Schallemissionsprüfung dahingehend verbessert, dass Störgeräusche minimiert werden, der Aufbau der Druckaufbringvorrichtung vereinfacht ist und kein zusätzliches Prüfgas aus einer externen Quelle zur Drucksteigerung verwendet werden muss. Es lassen sich ebenfalls negative Auswirkungen der Prüfung auf die Umgebung vermeiden, wenn ggf. ansonsten nach Abschluss der Prüfung überschüssiges Gas an die Umwelt abgegeben werden muss.

## Beschreibung

Die Erfindung betrifft eine Druckaufbringvorrichtung zur Durchführung einer Schallemissionsprüfung an einem Druckgerät, insbesondere Druckbehälter, in dem verflüssigtes Gas gelagert ist.

Eine entsprechende Schallemissionsprüfung ist beispielsweise in der EP 2 199 787 B1 beschrieben. Eine solche Schallemissionsprüfung ist ein im Wesentlichen zerstörungsfreies Prüfverfahren, bei dem plötzliche Veränderungen im Gefüge eines Werkstoffes eines Druckgeräts, die durch eine mechanische Belastung ausgelöst werden, zur Emission von Schall führen. Dadurch kann eine Deduktion und Lokalisation von Fehlstellen wie Leckagen, Rissen oder Korrosion in dem Druckgerät erfolgen. Solche Druckgeräte werden im Rahmen der Betriebssicherheitsverordnung wiederkehrend geprüft, wobei bei Vorliegen eines durch eine anerkannte zugelassene Überwachungsstelle bestätigten Prüfkonzeptes, die Innenbesichtigung im Rahmen der inneren Prüfung des Druckgeräts durch eine Schallemissionsprüfung ersetzt werden kann.

Ebenfalls kann eine hydrostatische Festigkeitsprüfung des Druckgeräts durch eine Gasdruckprüfung ersetzt werden, wenn diese aus Arbeitssicherheitsgründen in der Regel mittels Schallemissionsprüfung überwacht wird.

Entsprechende Druckgeräte sind beispielsweise Druckluftbehälter, Druckgeräte zur Speicherung von Gasen, Druckbehälter zur Lagerung unter Druck verflüssigter Gase, Druckgeräte in hydraulischen Anlagen, wie Blasen, Kolbenspeicher oder Flaschen, Druckgeräte mit Einbauten, Behälter wie Sinteröfen, Autoklaven, Härteöfen, Durchleitungs-Druckbehälter oder dergleichen.

Zur Schallemissionsprüfung werden in Abhängigkeit von der geplanten Ortungsart in vorberechneten Abständen Schallemissionssensoren am Druckgerät angebracht und dann durch Druckaufbau im Druckgerät die mechanische Belastung sowie die entsprechende Emission von Schall ausgelöst. Durch Auswertung der an den Schallemissionssensoren detektierten Schallsignale können bereits zu einem frühen Zeitpunkt eventuelle Schäden identifiziert werden, um dadurch beispielsweise größere Folgeschäden vorauszusagen. Außerdem erlaubt die Schallemissionsprüfung die Lokalisierung einer Quelle eines entsprechenden Schallemissionssignals sowie auch eine Unterscheidung verschiedener Arten von Quellen.

Eine weitere Druckaufbringvorrichtung der oben genannten Art ist beispielsweise aus der EP 20 190 845 bekannt. Bei dieser wird eine verfahrbare Druckerzeugungsquelle mit einem Druckmediumvorrat verwendet, wobei weiterhin ein Druckpufferbehälter zwischen Druckgerät und Druckmediumvorrat angeordnet ist. Das Druckmedium wird unter einem ersten Druck aus dem Druckmediumvorrat dem Druckpufferbehälter und von dort über eine einzelne Ableitung dem Druckgerät ggf. unter einem zweiten Druck zugeführt. Bei dieser bereits bekannten Vorrichtung bzw. Verfahren zur Druckaufbringung in Druckbehältern zur Lagerung unter Druck verflüssigter Gase wird in der Regel ein externes Prüfgas durch Überströmen in den Druckbehälter zur Druckerhöhung eingesetzt. Dies erfolgt bis ein notwendiger Prüfdruck erreicht wird. Nach erfolgter Prüfung muss aus Sicherheitsgründen der vorhandene Druck auf den maximal zulässigen Betriebsdruck des Druckgerätes abgesenkt werden. Sollte der Prüfdruck durch das Aufbringen mit Prüfgas erfolgt sein, das beispielsweise nicht der Zusammensetzung des im Druckgerät enthaltenen Gases entspricht, so ist dieses außerdem wieder komplett zu entfernen, damit die weitere Verwendung des im Druckgerät enthaltenen verflüssigten Gases nicht gestört wird. Ein solches Entfernen kann beispielsweise durch Ablassen des Prüfgases in die Atmosphäre erfolgen, wodurch die Umwelt unnötig belastet werden kann.

Außerdem hat sich herausgestellt, dass bei Anwendung der Druckaufbringung ohne Druckpufferbehälter im Prüfobjekt störende Strömungsgeräusche und ggf. Vibrationen durch den Einsatz von Pumpen und Kompressoren auftreten. Es können ebenfalls Störgeräusche durch das Überströmen des Prüfgases in das Druckgerät auftreten. Diese können entsprechende Nutzsignale bei der Behälterprüfung mittels Schallemission überlagern oder zumindest stören. Solche Störgeräusche können sich aufgrund der Strömungsverhältnisse und/oder aufgrund von Druckstößen und Vibrationen durch einen externen Druckerzeuger ergeben.

Ein weiterer Nachteil beim vorbekannten Stand der Technik ist, dass der zusätzliche Transport von Druckflaschen und Batterien für das Prüfgas einen erheblichen Mehraufwand darstellt. Teilweise ist auch ein spezielles Fahrzeug mit entsprechenden Genehmigungen für einem solchen Transport notwendig.

Der Erfindung liegt daher die Aufgabe zugrunde, ein Druckaufbringverfahren zur Durchführung einer Schallemissionsprüfung und eine entsprechende Vorrichtung dahingehend zu verbessern, dass Störgeräusche minimiert werden, der Aufbau der Vorrichtung vereinfacht ist und kein zusätzliches Prüfgas aus einer externen Quelle zur Drucksteigerung verwendet werden muss. Dadurch werden auch negative Auswirkungen der Prüfung auf die Umwelt vermieden, wenn ggf. nach Abschluss der Prüfung überschüssiges Gas an die Umwelt abgegeben werden muss.

Die Aufgabe wird durch die Merkmale der unabhängigen Ansprüche gelöst.

Die Erfindung zeichnet sich insbesondere dadurch aus, dass das im Druckgerät vorhandene Gas oder verflüssigte Gas zur Druckaufbringung verwendet wird, indem dem Druckgerät einer Heizeinrichtung zum gesteuerten Erwärmen und/oder Verdampfen eines Teils dieses im Druckgerät enthaltenen Gases oder verflüssigten Gases zugeordnet ist. Enthält der Druckbehälter beispielsweise flüssiges CO₂, ist also ein Druckbehälter zur Lagerung verflüssigter Gase, wird der notwendige Prüfdruck für die Schallemissionsprüfung dadurch erzeugt, dass die Heizeinrichtung das flüssige CO₂ und/oder bereits verdampftes CO₂ erwärmt. Das auf diese Weise erwärmte und/oder verdampfte Gas erhöht den Innendruck bis der notwendige Prüfdruck erreicht ist.

Da das im Druckgerät enthaltene Gas bzw. das verflüssigte Gas verwendet wird, ist kein Transport von weiterem Gas notwendig und ebenso muss dieses zusätzliche Gas nicht mit dem Druckgerät verbunden werden. Zum Abschluss der Prüfung kann durch Kühlung des Druckgeräts der Innendruck soweit abgesenkt werden, dass eine Abgabe von Gas innerhalb des Druckgeräts zur Senkung des Prüfdrucks nicht notwendig ist.

Die Zuordnung der Heizeinrichtung zum Druckgerät kann beispielsweise so erfolgen, dass dieses direkt außen am Druckgerät befestigt ist, dass dieses im Druckgerät angeordnet ist oder auch außerhalb und beabstandet vom Druckgerät angeordnet ist. Im Fall einer im Druckgerät eingebauten Heizung wird direkt im Druckgerät enthaltenes verflüssigtes Gas oder bereits verdampftes Gas erwärmt bzw. verdampft. Es sind keine weiteren Anschlüsse notwendig. Dies gilt analog auch für eine Heizeinrichtung direkt außen am Druckgerät. Ist die Heizeinrichtung beabstandet außerhalb des Druckgeräts angeordnet, so kann eine solche Heizeinrichtung einem Verdampfungsbehälterzugeordnet sein, der mit dem Druckgerät über eine Flüssigleitung und eine Gasleitung verbunden ist. Über die Flüssigleitung wird dem Behälter die flüssige Phase des Gases entnommen, dann durch die Heizeinrichtung verdampft und anschließend als Gas über die Gasleitung dem Behälter wieder zugeführt.

Um den Prüfdruck in einfacher Weise einstellen zu können, kann die Heizeinrichtung in ihrer Heizleistung einstellbar sein. Dadurch werden in einfacher Weise Menge und Temperatur des erwärmten oder verdampften Gases kontrolliert. Wie bereits oben ausgeführt, kann es bereits ausreichend sein auch nur bereits im Druckgerät enthaltenes Gas in der Gasphase zu erwärmen oder auch nur geringe Mengen des druckverflüssigten Gases zu verdampfen.

Um zu verhindern, dass ggf. zu hohe Prüfdrucke auftreten, können Druckgerät und/oder Verdampfungsbehälter ein Überdruckventil aufweisen.

Im Folgenden werden anhand der beigefügten Figuren zwei Ausführungsbeispiele der Erfindung näher beschrieben. Dabei zeigen
- Figur 1: eine Prinzipdarstellung eines ersten Ausführungsbeispiels mit im Druckgerät angeordneter Heizeinrichtung und
- Figur 2: ein Ausführungsbeispiel der Erfindung mit einer externen Heizeinrichtung.

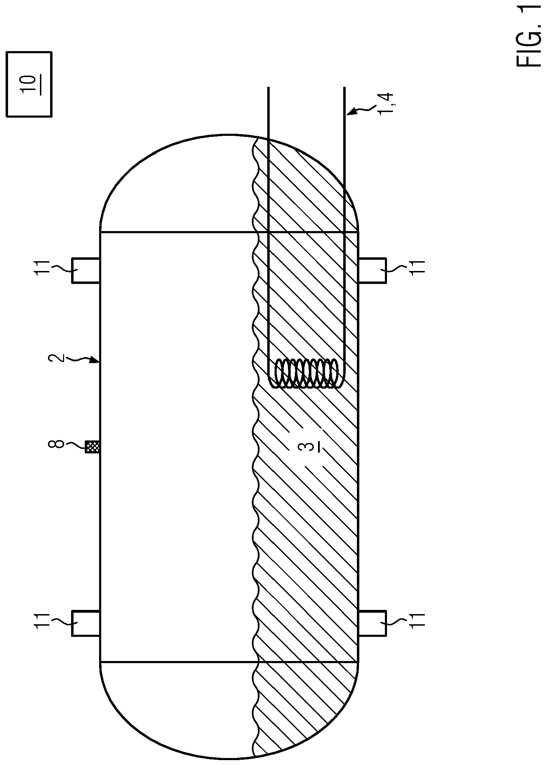

In Fig. 1 ist ein erstes Ausführungsbeispiel der Erfindung dargestellt. Die Druckaufbringvorrichtung 1 ist Teil eines Druckgeräts 2 und wird im Wesentlichen durch eine im Druckgerät 2 enthaltene Heizeinrichtung 4 gebildet. Das Druckgerät 2 ist ein Druckbehälter, in dem unter Druck verflüssigtes Gas 3 enthalten ist. Oberhalb des verflüssigten Gases 3 ist dieses auch in einer Gasphase im Druckgerät 2 enthalten. Entsprechende Gase sind beispielsweise CO₂, N2 oder dergleichen.

Außen am Druckgerät 2 sind eine Reihe von Schallemissionssensoren 11 angeordnet. Diese sind mit einer Auswerteinheit 10 drahtlos oder auch über Kabel verbunden.

Durch Betätigung der Heizeinrichtung 4 im Inneren des Druckgerätes 2 wird zusätzlich verflüssigtes Gas 3 verdampft und/oder bereits im Druckgerät 2 enthaltene Gasphase des Gases erwärmt. Dadurch kommt es zu einer Erhöhung des Innendrucks im Druckgerät auf einen entsprechenden Prüfdruck, wobei bereits bei Erhöhung des Innendrucks oder bis zum notwendigen Prüfdruck mittels der Schallemissionssensoren 11 die Schallemissionsprüfung durchführbar ist. Bei Erreichen des Prüfdrucks kann die Heizeinrichtung 4 ausgeschaltet werden. Nach Durchführung der Schallemissionsprüfung erfolgt in der Regel ein Abkühlen des Druckgeräts, wobei dies passiv, durch das noch vorhandene flüssige Gas oder die Umgebungsluft erfolgen kann. Es ist ebenfalls möglich, dass die Heizeinrichtung 4 direkt auf der Oberfläche des Druckgerätes 2 angeordnet sind. Dadurch erfolgt dann ein indirektes Aufheizen des Inneren des Druckgerätes und damit die Herstellung des Prüfdrucks.

Bei dem Ausführungsbeispiel nach Fig. 1 ist es in keiner Weise notwendig, dem Druckgerät etwas zu entnehmen oder diesem etwas zuzuführen, um die Schallemissionsprüfung durchzuführen. Es wird in einfacher Weise das bereits in dem Druckbehälter vorhandene Gas in seiner Gas- und/oder Flüssigphase zur Herstellung eines entsprechenden Prüfdrucks verwendet.

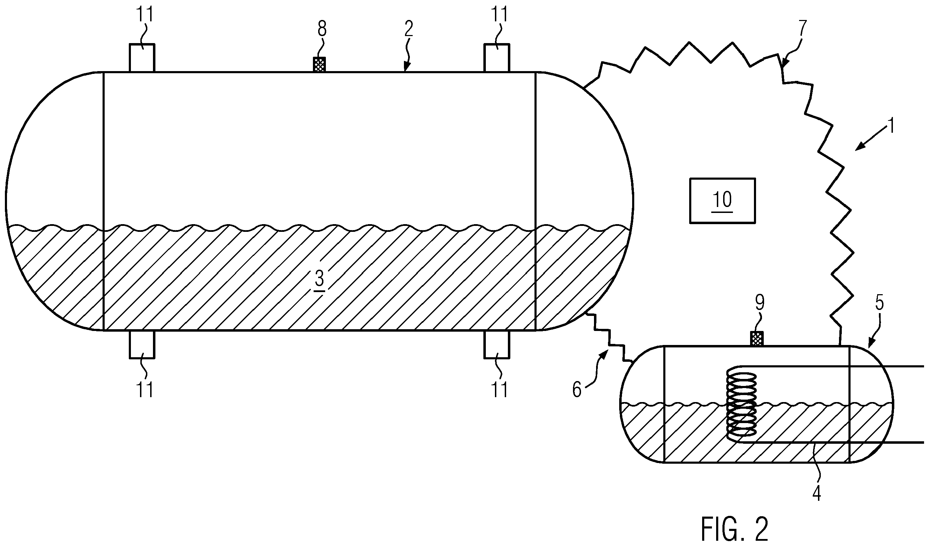

Bei dem Ausführungsbeispiel nach Fig. 2 wird ebenfalls das im Behälter enthaltene Gas verwendet, wobei allerdings das Heizen beabstandet vom Druckgerät 2 in einem separaten Verdampfungsbehälter 5 erfolgt. Diesem ist die Heizeinrichtung 4 zugeordnet.

Um dem Druckgerät Gas in der Flüssigphase entnehmen zu können, ist der Verdampfungsbehälter 5 mittels einer Flüssigleitung 6 mit dem Druckgerät verbunden. Eine geringe Menge des verflüssigten Gases wird dem Druckgerät 2 auf diese Weise entnommen und mittels der Heizeinrichtung 4 verdampft. Eine Rückführung des Gases in die Gasphase erfolgt über eine Gasleitung 7, die den Verdampfungsbehälter 5 wieder mit dem Druckgerät 2 verbindet. In der Regel ist die Flüssigleitung 6 an einer Stelle mit dem Druckgerät 2 verbunden, an welcher das Gas in seiner verflüssigten Phase vorliegt. Analog ist die Gasleitung 7 mit dem Druckgerät 2 an einer Stelle verbunden, an der das Gas in der Regel in seiner Gasphase vorliegt.

Weiterhin ist sowohl dem Druckgerät 2 als auch dem Verdampfungsbehälter 5 ggf. ein Überdruckventil 8, 9 zugeordnet, so dass ein unzulässig hoher Druck vermieden wird. Die Überdruckventile 8, 9 können ebenfalls zur Druckmessung ausgebildet sein, so dass diese im Zusammenhang mit der Auswerteeinheit 10 ebenfalls zur Überprüfung des Innendrucks im Druckgerät 2 bzw. im Verdampfungsbehälter 5 sowie auch zur Einstellung des Prüfdrucks verwendet werden können.

Erfindungsgemäß ist es insbesondere nicht notwendig, separate Druck- oder Gasquellen zu verwenden und entsprechend zu transportieren. Beim Ausführungsbeispiel nach Fig. 1 ist auch kein zusätzlicher Anschluss am Druckgerät erforderlich und nur die im Druckgerät enthaltene Heizeinrichtung 4 wird eingesetzt, um den Prüfdruck für die Schallemissionsprüfung zu erzeugen. Auch beim Ausführungsbeispiel nach Fig. 2 wird kein separates Druckmedium verwendet, sondern bereits im Druckgerät 2 enthaltenes Gas in flüssiger oder gasförmiger Phase. Nur die Heizeinrichtung mit dem Verdampfungsbehälter 5 wird transportiert und mit dem Druckgerät 2 über die Flüssigleitung 6 und Gasleitung 7 verbunden. Auch hier erfolgt die Überwachung des Drucks beispielsweise über die Überdruckventile 8, 9, die ggf. als Drucksensoren ausgebildet werden können.

Erfindungsgemäß ist somit, siehe Figur 1, die Druckaufbringvorrichtung durch eine Heizeinrichtung 4, oder, siehe Figur 2, durch eine Heizeinrichtung 4, Verdampfungsbehälter 5 und entsprechende Verbindungen 6,7 zum Druckgerät gebildet.

## Patentansprüche

1. Druckaufbringvorrichtung (1) zur Durchführung einer Schallemissionsprüfung von einem Druckgerät (2), insbesondere Druckbehälter, in dem unter Druck verflüssigtes Gas (3) enthalten ist, wobei dem Druckgerät (2) zumindest eine Heizeinrichtung (4) als Druckaufbringvorrichtung (1) zur gesteuerten Erwärmung und/oder Verdampfung eines Teils des im Druckgerät (2) enthaltenen Gases oder verflüssigten Gases (3) zugeordnet ist.

2. Druckaufbringvorrichtung nach Anspruch 1, wobei die Heizeinrichtung (4) im Druckgerät (2) angeordnet ist.

3. Druckaufbringvorrichtung nach Anspruch 1, wobei die Heizeinrichtung (4) außerhalb des Druckgeräts (2) angeordnet ist.

4. Druckaufbringvorrichtung nach einem der vorangehenden Ansprüche, wobei die Heizeinrichtung (4) einem Verdampfungsbehälter (5) zugeordnet ist, der mit dem Druckgerät (2) über eine Flüssigleitung (6) und eine Gasleitung (7) verbunden ist.

5. Druckaufbringvorrichtung nach einem der vorangehenden Ansprüche, wobei die Heizeinrichtung (4) in ihrer Heizleistung einstellbar ist.

6. Druckaufbringvorrichtung nach einem der vorangehenden Ansprüche, wobei das Druckgerät (2) und/oder der Verdampfungsbehälter (5) ein Überdruckventil (8, 9) aufweist.

7. Verfahren zur Durchführung einer Schallemissionsprüfung eines Druckgeräts (2), insbesondere eines Druckbehälters, mit den folgenden Schritten:
i) Aufbau einer Schallemissionsprüfvorrichtung aus zumindest einer Anzahl von Schallemissionssensoren (11) am Druckgerät (2) als Prüfobjekt und einer mit den Schallemissionssensoren (11) verbundenen Auswerteeinheit (10);
ii) Aufbau eines Prüfdrucks im Prüfobjekt mittels einer dem Druckgerät (2) zugeordneten Heizeinrichtung (4) durch Verdampfen und/oder Erwärmen eines im Druckgerät (2) enthaltenen Gases oder verflüssigten Gases (3) und gleichzeitiger Überwachung des Prüfobjekts mittels der Schallemissionsprüfvorrichtung;
iii) Aufrechterhalten des Prüfdrucks zur weiteren Durchführung der Schallemissionsprüfung und
iv) Ausschalten der Heizeinrichtung (4) und Abbau des Prüfdrucks durch Abkühlung.

8. Verfahren nach Anspruch 7, **gekennzeichnet durch** ein Verdampfen des Gases (3) im Inneren des Druckgeräts (2) durch eine im oder am Druckgerät angeordnete Heizeinrichtung (4).

9. Verfahren nach Anspruch 7 oder 8, **gekennzeichnet durch** Überführen eines Teils des verflüssigten Gases (3) aus dem Inneren des Druckgeräts (2) in einen Verdampfungsbehälter (5) mit Heizeinrichtung, und Verdampfen des verflüssigten Gases im Verdampfungsbehälter und Rückführung in das Druckgerät (2).
